# EUROPÄISCHE PATENTSCHRIFT

(11) **EP 2 057 030 B1**
(45) Veröffentlichungstag und Bekanntmachung des Hinweises auf die Patenterteilung: **07.07.2010**
(21) Anmeldenummer: 07801515.3
(22) Anmeldetag: 04.08.2007
(51) Int. Cl.: B60K 23/04, B60K 23/08

(54) **AKTIVES DIFFERENZIAL**
ACTIVE DIFFERENTIAL
DIFFÉRENTIEL ACTIF

(30) Priorität: 26.08.2006 DE 102006040144
(43) Veröffentlichungstag der Anmeldung: 13.05.2009
(73) Patentinhaber: VOLKSWAGEN AG, 38436 Wolfsburg (DE)
(72) Erfinder: SUE, Armin, 38527 Meine (DE); LUTZ, Andreas, 38100 Braunschweig (DE); TENBERGE, Peter, 09123 Chemnitz (DE)
(86) Internationale Anmeldenummer: PCT/EP2007/006913
(87) Internationale Veröffentlichungsnummer: WO 2008/025434

(56) Entgegenhaltungen:
- EP-A- 1 634 756
- WO-A-02/09966
- WO-A-2005/033555
- WO-A-2006/060139
- US-B1- 6 402 652

## Beschreibung

Die Erfindung betrifft ein aktives Differenzial zwischen einer Antriebswelle und zwei Abtriebswellen, bestehend aus einem Getriebeteil und einem Regelteil, wobei der Getriebeteil ein mindestens 4-welliges Überlagerungsgetriebe mit den beiden Abtriebswellen und zwei Reaktionswellen aufweist und dass die beiden Reaktionswellen mit je einer Drehmoment aufprägenden Einrichtung im Regelteil verbunden sind. Solche Differenziale werden vorzugsweise zur variablen Drehmomentverteilung und damit auch zur variablen Leistungsverteilung von der einen Antriebswelle zu den beiden Abtriebswellen genutzt.

Die DE 3900638 C2 beschreibt ein aktives Differenzial vorzugsweise für den Antrieb einer Fahrzeugachse. Der Getriebeteil dieses aktiven Differenzials umfasst ein nach dem Stand der Technik bekanntes Kegelraddifferenzial und weitere Getriebestufen. So ein Kegelraddifferenzial teilt das Antriebsdrehmoment gleichmäßig, also im Verhältnis 50% : 50% auf die beiden Abtriebswellen auf. Um eine variable Drehmomentverteilung zwischen 100% : 0% und 0% : 100% zu erreichen, hat diese Getriebeanordnung noch die weiteren Getriebestufen und zwei regelbare Kupplungen. Eine erste Kupplung.regelt die Leistung in einem Leistungspfad von der Antriebswelle zur ersten Abtriebswelle. Eine zweite Kupplung regelt die Leistung in einem Leistungspfad von der Antriebswelle zur zweiten Abtriebswelle.

Aus der WO 20061060139 A2 ist ein aktives Differenzial nach dem Oberbegriff der Ansprüche 1,7 und 8 bekannt, bei dem ein als Planetengetriebe ausgebildetes, offenes Differenzial eine gleichmäßige Verteilung des Momentes von der Antriebswelle auf die Abtriebswellen bewirkt, wobei das von der Antriebswelle angetriebene Hohlrad und der mit einer der Abtriebswellen verbundene Planetenträger über eine elektromotorisch angesteuerte Kupplung gesteuert miteinander koppelbar sind.

Da Kupplungen nur von einer betragsmäßig schnellen Kupplungshälfte auf eine mit gleichem Vorzeichen langsamer drehende Kupplungshälfte Leistung übertragen können, benötigt so ein aktives Differenzial einen in allen Betriebspunkten ausreichenden Schlupf in den beiden Kupplungen. Dieser Schlupf wird durch die Übersetzungen der oben angeführten weiteren Getriebestufen erzeugt.

Sind die beiden Kupplungen geöffnet, wird das Antriebsdrehmoment im Kegelraddifferenzial gleichmäßig auf beide Abtriebswellen aufgeteilt. Soll nun zum Beispiel die erste Abtriebswelle ein höheres Drehmoment als die zweite Abtriebswelle erhalten, so wird die erste Kupplung im Leistungspfad zwischen der Antriebswelle und der ersten Abtriebswelle so aktiviert, dass sie eine Teilleistung direkt von der Antriebswelle auf diese Abtriebswelle überträgt. Das Kegelraddiffererizial wird um diesen Leistungsteil entlastet. Das Kegelraddifferenzial mit fester Drehmomentverteilung liegt somit im Leistungsfluss parallel zu den beiden regelbaren Leistungspfaden.

Für eine 100%ige Leistungsübertragung auf nur eine Abtriebswelle muss die dafür aktivierte Kupplung die gesamte Leistung übertragen. Das Kegelraddifferenzial ist dann lastfrei. Das bedeutet, dass in so einem aktiven Differenzial sowohl das Hauptdifferenzial, hier das Kegelraddifferenzial, als auch die beiden regelbaren Leistungspfade jeweils für die volle Antriebsleistung auszulegen sind. Die Kupplungen sind demnach für hohe Abtriebsdrehmomente auszulegen. Auch wenn die Relativdrehzahlen in den Kupplungen klein sind, führt dies zu recht großen Kupplungen.

Die Erfindung nach der US 6,120,407 versucht dieses Problem durch eine andere Ausführung der regelbaren Leistungspfade von der Antriebswelle zu den beiden Abtriebswellen zu lösen. In dieser Schrift wird vorgeschlagen, in jedem der regelbaren Leistungspfade ein Umlaufrädergetriebe mit einer positiven Standübersetzung zu nutzen. Die Antriebswelle steht mit einem Zentralrad, zum Beispiel einem Sonnenrad, in drehfester Verbindung, eine Abtriebswelle steht mit einem anderen Zentralrad, dann ebenfalls ein Sonnenrad, in drehfester Verbindung. Die beiden Zentralräder wirken über Stufenplaneten aufeinander, die in einem Planetenträger gelagert sind. Der Planetenträger ist über eine regelbare Bremse mit dem Getriebegehäuse verbindbar.

In so einer Anordnung kann die regelbare Bremse am Planetenträger nur dann einen Leistungsfluss von der Antriebswelle zur Abtriebswelle regeln, wenn die Standübersetzung im Überlagerungsgetriebe i₀ = (n_{ab}-n_{Planetenträger})/(nₐₙ-n_{Planetenträger}) > 1 ist. Denn nur dann erfordert ein positives Antriebsdrehmoment und ein negatives Abtriebsdrehmoment auch an der Bremse ein negatives Drehmoment. Das ist wichtig, weil eine aktivierte Bremse bei positiven Drehzahlen an der zu bremsenden Welle, hier der Planetenträger, nur ein negatives Reaktionsmoment erzeugen kann. Für die Auslegung dieses Umlaufrädergetriebes ist es deshalb außerdem wichtig, dass selbst bei maximalem Drehzahlverhältnis zwischen Abtriebswelle und Antriebswelle von zum Beispiel n_{abmax}/nₐₙₘₐₓ=1,1 bei enger Kurvenfahrt die Bremse noch einen positiven Schlupf zum Getriebegehäuse hat. Das führt dann zu der Bedingung i₀>n_{abmax}/nₐₙₘₐₓ. Um das Reaktionsmoment am Planetenträger und damit die Verlustleistung beim Regeleingriff möglichst klein zu halten, sollten die Standübersetzungen der Überlagerungsgetriebe aber auch nicht wesentlich über den Werten n_{abmax}/nₐₙₘₐₓ liegen.

Bei Planetengetrieben mit Standübersetzungen in der Nähe von +1 hängt das Reaktionsmoment am Planetenträger durchaus stark vom Wirkungsgrad und von der Richtung des Gleitwälzleistungsflusses ab. Die Richtung des Gleitwälzleistungsflusses ändert sich mit dem Vorzeichen der Drehzahldifferenz zwischen den Zentralrädern, in dieser Anwendung also zwischen Antriebswelle und Abtriebswelle. Bei gleicher Leistungsübertragung in diesem Leistungspfad ändert sich damit dann sprunghaft das dafür erforderliche Reaktionsmoment an der Bremse. Bei einem relativ niedrigen Wirkungsgrad in diesem Teilgetriebe, zum Beispiel infolge des Verzichtes auf Wälzlagerungen für die Planetenräder, kann das sogar dazu führen, dass sich dieser Leistungspfad in einer Richtung des Gleitwälzleistungsflusses überhaupt nicht mehr regeln lässt.

Auch bei diesem Getriebe sind die beiden Leistungspfade zur Regelung der Drehmomentverteilung zum Kegelraddifferenzial parallel geschaltet. Wie in der Ausführung nach der DE 3900638 C2 sind diese beiden Leistungspfade deshalb auf die maximale Antriebsleistung auszulegen.

Der Erfindung liegt damit die Aufgabenstellung zugrunde, ein aktives Differenzial mit folgenden Eigenschaften zu konzipieren. Die für die Regelung erforderlichen Drehmoment aufprägenden Elemente sollen niedrig belastet sein. Das an den Drehmoment aufprägenden Elementen nötige Regelmoment soll dabei nur wenig vom kinematischen Zustand des Differenzials abhängen. Das Hauptdifferenzial und die regelbaren Leistungspfade sollen so zusammenwirken, dass diese regelbaren Leistungspfade für deutlich weniger als die volle Antriebsleistung auszulegen sind. Insgesamt soll das aktive Differenzial natürlich so klein und leicht wie möglich sein und einfach herzustellen sein.

Erfindungsgemäß wird diese Aufgabe durch Getriebeanordnungen mit den Merkmalen der Ansprüche 1, 7 und 8 gelöst. Nach Anspruch 1 wird die Aufgabe in Verbindung mit den Merkmalen des Oberbegriffs dadurch gelöst, dass das Überlagerungsgetriebe im Getriebeteil einen Planetenträger aufweist, der mit einer der Reaktionswellen in Verbindung steht, dass das Überlagerungsgetriebe ein Sonnenrad aufweist, das mit der anderen Reaktionswelle in Verbindung steht, und dass das Überlagerungsgetriebe mindestens zwei Hohlräder aufweist, die mit den beiden Abtriebswellen in Verbindung stehen.

Nach Anspruch 7 wird die Aufgabe in Verbindung mit den Merkmalen des Oberbegriffs dadurch gelöst, dass das Überlagerungsgetriebe im Getriebeteil einen Planetenträger aufweist, der mit einer der Abtriebswellen in Verbindung steht, dass das Überlagerungsgetriebe ein Hohlrad aufweist, das mit der anderen Abtriebswelle in Verbindung steht, dass das Überlagerungsgetriebe zwei Sonnenräder aufweist, die je mit einer der beiden Reaktionswellen in Verbindung stehen und dass der Planetenträger mehrere Sätze von Planetenrädern aufweist, wobei jeder Satz einen Hohlradplaneten aufweist, der mit dem einen Hohlrad kämmt und der mit dem einen Sonnenrad direkt und mit dem anderen Sonnenrad über ein weiteren Sonnenradplaneten in Eingriff steht.

Nach Anspruch 8 wird die Aufgabe schließlich dadurch gelöst, dass das Überlagerungsgetriebe im Getriebeteil aus einer ersten und einer zweiten einfachen Planetenradstufe besteht, die jeweils ein Sonnenrad, ein Hohlrad und einen Planetenträger mit mehreren Einzelplaneten aufweisen, wobei das erste Hohlrad und der zweite Planetenträger mit der ersten Abtriebswelle in Verbindung stehen, wobei das zweite Hohlrad und der erste Planetenträger mit der zweiten Abtriebswelle in Verbindung stehen und wobei die beiden Sonnenräder mit den beiden Reaktionswellen in Verbindung stehen.

Anders als nach dem Stand der Technik werden nach dieser Erfindung das Hauptdifferenzial und die zu regelnden Leistungspfade hintereinander geschaltet. Das Hauptdifferenzial teilt dann in allen Betriebspunkten das Antriebsdrehmoment erst einmal gleichmäßig auf die beiden Abtriebswellen auf. In dem mindestens 4-welligen Überlagerungsgetriebe kann dann durch Aktivierung mindestens einer ersten Drehmoment aufprägenden Einrichtung an der ersten Reaktionswelle ein Leistungsfluss von der ersten Abtriebswelle zur zweiten Abtriebswelle geregelt werden. Durch Aktivierung mindestens einer zweiten Drehmoment aufprägenden Einrichtung an der zweiten Reaktionswelle kann ein Leistungsfluss von der zweiten Abtriebswelle zur ersten Abtriebswelle geregelt werden. Selbst für einen vollständigen Leistungsfluss (100%) über nur eine Abtriebswelle muss dieses Überlagerungsgetriebe nur für etwa die halbe Antriebsleistung dimensioniert werden.

In weiterer Ausgestaltung der Erfindung wird das 4-wellige Überlagerungsgetriebe um eine Welle zu einem 5-welligen Überlagerungsgetriebe erweitert, Diese fünfte Welle steht mit der Antriebswelle in Verbindung. Dadurch gelingt es, dass Hauptdifferenzial und den Getriebeteil, auf den die Regeleingriffe wirken, in einem einzigen Überlagerungsgetriebe sehr kompakt zusammenzufassen.

Nach den Ansprüchen 1 und 2 weist dieses 4- bzw. 5-wellige Überlagerungsgetriebe (nur) einen Planetenradträger auf, der mit einer der Reaktionswellen in Verbindung steht. Außerdem hat es ein Sonnenrad, das mit der anderen Reaktionswelle in Verbindung steht. Dann hat dieses Überlagerungsgetriebe auch noch 2 oder 3 Hohlräder, die mit den beiden Abtriebswellen oder in der 5-welligen Ausführung zusätzlich mit der Antriebswelle in Verbindung stehen. Die Antriebswelle und die Abtriebswellen führen große Drehmomente. Die Abstützung dieser Drehmomente über Hohlräder führt zu einer kompakten Konstruktion. Die Reaktionsmomente an den Reaktionswellen sollen klein sein. Ein Reaktionsmoment wird an einem innen liegenden und damit kleinen Sonnenrad abgestützt. Das andere Reaktionsmoment wird am Planetenträger abgestützt.

Dieser Aufbau ist nötig, um positive Standübersetzungen zwischen dem Sonnenrad und allen Hohlrädern zu erzeugen. In jeder dieser 2 öder 3 Teilstufen zwischen dem Sonnenrad und je einem Hohlrad ist dann das Hohlrad die so genannte Summenwelle mit dem Summendrehmoment und das Sonnenrad sowie der Planenteträger sind so genannte Differenzwellen mit betragsmäßig kleineren Differenzdrehmomenten.

Um dies zu erreichen, weist der Planetenträger nach Anspruch 3 bzw. 4 mehrere Sätze von Planeten auf, von denen jeder Satz einen Sonnenradplaneten aufweist, der mit dem Sonnenrad kämmt, und von denen jeder Satz mehrere Hohlradplaneten aufweist, wobei alle Hohlradplaneten mit dem Sonnenradplaneten kämmen und wobei der erste Hohlradplanet zusätzlich mit dem Hohlrad der ersten Abtriebswelle kämmt und der zweite Hohlradplanet mit dem Höhlrad der zweiten Abtriebswelle kämmt und der eventuell vorhandene dritte Hohlradplanet mit dem Hohlrad der Antriebswelle kämmt.

Alternativ weist der Planetenträger nach Anspruch 5 bzw. 6 mehrere Sätze von Planeten auf, von denen jeder Satz einen Sonnenradplaneten aufweist, der mit dem Sonnenrad kämmt, und von denen jeder Satz einen Stufenplaneten mit mehreren Stufen aufweist, wobei der Stufenplanet über eine seiner Stufen mit dem Sonnenradplaneten kämmt und wobei die erste Stufe des Stufenplaneten mit dem Hohlrad der ersten Abtriebswelle kämmt und die zweite Stufe mit dem Hohlrad der zweiten Abtriebswelle kämmt und die eventuell vorhandene dritte Stufe mit dem Hohlrad der Antriebswelle kämmt.

Die Ausführungen der Planetengetriebe nach den Ansprüchen 3 bzw. 4 einerseits und 5 bzw. 6 andererseits sind bezüglich der grundsätzlichen Drehmoment- und Drehzahlverhältnisse gleichwertig. In einem 5-welligen Planetengetriebe, also mit integriertem Hauptdifferenzial, hat die Ausführung mit Stufenplaneten Vorteile im Wirkungsgrad, da dann bei ungeregelten Abtrieben, also bei lastfreiem Planetenträger und lastfreiem Sonnenrad, nur die Stufenplaneten belastet sind, nicht aber die Sonnenradplaneten. In der Ausführung mit den einzelnen Hohlradplaneten wirken die Zahnkräfte auch auf den Sonnenradplaneten, die Gleihnrälzleistung fließt dann verlustbehaftet über mehr Zahneingriffe. Einzelne Planeten sind aber einfacher und preiswerter zu fertigen als Stufenplaneten.

Für eine hohe Regelgüte und einen guten Wirkungsgrad ist auf eine reibungsarme Lagerung aller Planetenräder und hohe Verzahnungswirkungsgrade zu achten. Denn auch bei diesem aktiven Differenzial entstehen bei ungleichen Abtriebsdrehzahlen und hohen Belastungen hohe Gleitwälzleistungen, deren Richtung mit dem Vorzeichen der Drehzahldifferenz zwischen der Antriebswelle und den Abtriebswellen wechselt.

Eine etwas andere Variante des mindestens 4-weiligen Überlagerungsgetriebes weist nach Anspruch 7 einen Planetenträger auf, der mit einer der Abtriebswellen in Verbindung steht. Außerdem weist das Überlagerungsgetriebe ein Hohlrad auf, das mit der anderen Abtriebswelle in Verbindung steht, und zwei Sonnenräder, die je mit einer der beiden Reaktionswellen in Verbindung stehen. Der Planetenträger trägt mehrere Sätze von Planetenrädern, wobei jeder Satz einen eventuell gestuften Hohlradplaneten aufweist, der mit dem einen Hohlrad kämmt und der mit dem einen Sonnenrad direkt und mit dem anderen Sonnenrad über ein weiteren Sonnenradplaneten in Eingriff steht.

Im gleichen Bauraum ermöglicht diese Variante des mindestens 4-welligen Überlagerungsgetriebes zwar nur etwas kleinere Verhältnisse der Drehzahldifferenzen zwischen den beiden Reaktionswellen und zwischen den beiden Abtriebswellen, dafür sind die Umlaufwirkungsgrade etwas höher und die maximalen Drehzahlen am Planetenträger kleiner.

Nach Anspruch 8 lässt sich schließlich das mindestens 4-wellige Überlagerungsgetriebe über die Kopplung einer ersten und einer zweiten einfachen dreiwelligen Planetenradstufe darstellen, die jeweils ein Sonnenrad, ein Hohlrad und einen Planetenträger mit mehreren Einzelplaneten aufweisen. Dazu sind das erste Hohlrad und der zweite Planetenträger mit der ersten Abtriebswelle verbunden, das zweite Hohlrad und der erste Planetenträger mit der zweiten Abtriebswelle verbunden und die beiden Sonnenräder stehen mit den beiden Reaktionswellen in Verbindung.

Dieser Getriebeaufbau vermeidet Stufenplaneten und miteinander kämmende Planetenräder. Außerdem führt diese Ausgestaltung der Erfindung zu relativ großen Planetenrädern, die sehr einfach wälzgelagert werden können. Insgesamt ergibt sich somit ein Überlagerungsgetriebe mit sehr hohem Wirkungsgrad.

Nach Anspruch 9 ist mindestens eine der Drehmoment aufprägenden Einrichtungen eine Bremse, mit der eine Reaktionswelle mit dem Getriebegehäuse verbindbar ist. Nach Anspruch 10 ist mindestens eine der Drehmoment aufprägenden Einrichtungen eine elektrische Maschine.

Hydraulisch oder anders betätigte mechanische Bremsen bauen relativ klein, können aber, abhängig von den Drehzahlverhältnissen, immer nur in eine Richtung Drehmoment übertragen, und zwar so, dass eine Leistung als Verlustleistung aus der Bremse zum Getriebegehäuse fließt.

Elektrische Maschinen bauen für das gleiche Drehmoment deutlich größer als mechanische Bremsen. Dafür können sie in beide Richtungen Drehmoment abstützen. Über das zumindest 4-wellige Überlagerungsgetriebe können dann beide elektrischen Maschinen gleichzeitig zur Regelung bestimmter Drehmomentverteilungen an den Abtriebswellen beitragen. In den meisten Betriebspurikten arbeitet dann eine Maschine als Generator und die andere als Motor. Über die Leistungssteuerung der Maschinen fließt dabei die Regelleistung vom Generator zum Motor. Die maximalen Drehmomentbelastungen an den E-Maschinen sind dann nur noch etwa halb so groß wie die maximalen Belastungen an mechanischen Bremsen, bei sonst gleichen Übersetzungen im Getriebeteil.

Ausführungen solcher aktiver Differenziale mit zwei elektrischen Maschinen zur Regelung der Drehmomentverteilung sind auch gleichzeitig als Hybridantriebe einsetzbar, wenn die beiden elektrischen Maschinen nach Anspruch 11 über ihre Leistungssteuerung mit einem Energiespeicher in Verbindung stehen.

Die Erfindung ist nicht nur auf die Merkmale ihrer Ansprüche beschränkt. Denkbar und vorgesehen sind auch Kombinationsmöglichkeiten einzelner Anspruchsmerkmale und Kombinationsmöglichkeiten einzelner Anspruchsmerkmale mit dem in den Vorteilsangaben und zu den Ausgestaltungsbeispielen Offenbarten.

Einige Ausführungsbeispiele des erfindungsgemäßen aktiven Differenzials sind in den Fig. 1 bis 9 dargestellt und in ihrer Funktionsweise bezüglich der Drehzahlverhältnisse, der Drehmomentverhältnisse und der Leistungsflüsse in verschiedenen Betriebszuständen erläutert. Dabei zeigen:
- Fig. 1: die Struktur des aktiven Differenzials mit einer ersten Ausführungsform des 4-welligen Überlagerungsgetriebes und zwei elektrischen Maschinen an den beiden Reaktionswellen,
- Fig. 2: die Struktur des aktiven Differenzials mit einer zweiten Ausführungsform des 4-welligen Überlagerungsgetriebes und zwei Bremsen an den beiden Reaktionswellen,
- Fig. 3: einen Drehzahl- und Drehmomentzustand in einem aktiven Differenzial mit zwei Bremsen an den beiden Reaktionswellen,
- Fig. 4: einen Drehzahl- und Drehmomentzustand in einem aktiven Differenzial mit zwei elektrischen Maschinen an den beiden Reaktionswellen,
- Fig. 5: die Struktur des aktiven Differenzials mit einer dritten Ausführungsform des 4-welligen Überlagerungsgetriebes und zwei elektrischen Maschinen an den beiden Reaktionswellen,
- Fig. 6: die Struktur des aktiven Differenzials mit einer vierten Ausführungsform des 4-welligen Überlagerungsgetriebes und zwei elektrischen Maschinen an den beiden Reaktionswellen,
- Fig. 7: die Struktur des aktiven Differenzials mit einer ersten Ausführungsform des 5-welligen Überlagerungsgetriebes und zwei Bremsen an den beiden Reaktionswellen,
- Fig. 8: einen Drehzahl- und Drehmomentzustand in einem aktiven Differenzial mit 5-welligem Überlagerungsgetriebe nach Fig. 7 und Bremsen als Drehmoment aufprägende Einrichtungen,
- Fig. 9: einen Drehzahl- und Drehmomentzustand in einem aktiven Differenzial mit 5-welligem Überlagerungsgetriebe nach Fig. 7 und elektrischen Maschinen als Drehmoment aufprägende Einrichtungen.

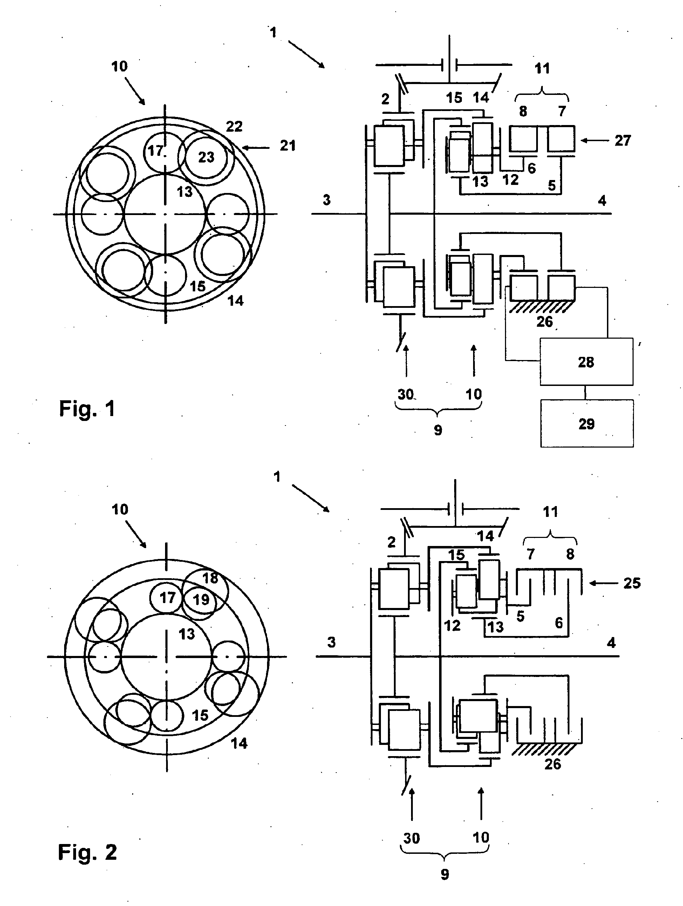

Fig. 1 zeigt die Struktur eines ersten Ausführungsbeispiels des erfindungsgemäßen aktiven Differenzials 1.. Die Antriebswelle 2 treibt das Hauptdifferenzial 30 mit den beiden Abtriebswellen 3 und 4. Beispielhaft wie nach dem Stand der Technik bekannt ist das Hauptdifferenzial 30 hier auch als Umlaufrädergetriebe mit einer Standübersetzung von +2 zwischen dem Sonnenrad und dem Hohlrad ausgeführt. Der Antrieb greift am Hohlrad an. Das Sonnenrad und der Planetenträger sind die Abtriebe.

Die beiden Abtriebswellen 3 und 4 sind mit den Hohlrädern 14 und 15 eines 4-welligen Überlagerungsgetriebes 10 verbunden. Das Sonnenrad 13 bildet die erste Reaktionswelle 5 dieses Getriebes. Der Planetenradträger 12 bildet die zweite Reaktionswelle 6 dieses Getriebes. Der Planetenträger 12 trägt mehrere Sätze von Planetenrädern. Ein Sonnenradplanet 17 kämmt mit dem Sonnenrad 13 und einem gestuften Hohlradplaneten 21. Die erste Stufe 22 des gestuften Hohlradplaneten 21 kämmt mit dem ersten Hohlrad 14. Die zweite Stufe 23 des gestuften Hohlradplaneten 21 kämmt mit dem zweiten. Hohlrad 15.

Beide Reaktionswellen stehen mit Drehmoment aufprägenden Einrichtungen 7, 8 des Regelteils 11 in Verbindung, die in diesem Ausführungsbeispiel als elektrische Maschinen 27 ausgeführt sind. Die beiden Maschinen sind über ihre Leistungssteuerung 28 untereinander und optional mit einem Energiespeicher 29 verbunden.

Fig. 2 zeigt ein ähnliches Ausführungsbeispiel des aktiven Differenzials. Das 4-wellige Überlagerungsgetriebe 10 hat ebenfalls einen Planetenträger 12, ein Sonnenrad 13, ein erstes Hohlrad 14, verbunden mit der ersten Abtriebswelle 3, und ein zweites Hohlrad 15, verbunden mit der zweiten Abtriebswelle 4. Der Planetenträger 12 trägt wiederum mehrere Sätze von Planetenrädern. Ein Sonnenradplanet 17 kämmt mit dem Sonnenrad 13 und mehreren Hohlradplaneten 18 und 19, wobei beide Hohlradplaneten mit dem Sonnenradplaneten 17 kämmen und wobei der erste Hohlradplanet 18 zusätzlich mit dem Hohlrad 14 der ersten Abtriebswelle 3 kämmt und der zweite Hohlradplanet 19 mit dem Hohlrad 15 der zweiten Abtriebswelle 4 kämmt.

Die Drehmoment aufprägenden Einrichtungen 7 und 8 des Regelteils 11 sind hier als Bremsen 25 zwischen den Reaktionswellen 5 und 6 und dem Getriebegehäuse 26 ausgeführt.

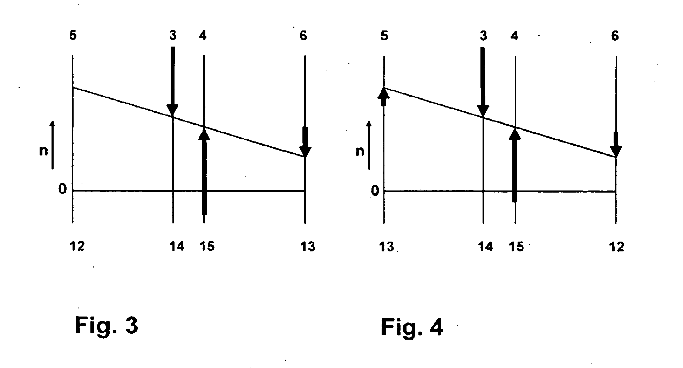

Fig. 3 zeigt das so genannte Drehzahlleiterdiagramm zu dem Überlagerungsgetriebe 10 nach Fig. 2. Zu jeder Welle des Überlagerungsgetriebes gehört eine Drehzahlleiter, auf der nach oben die Drehzahl aufgetragen wird. Die Abstände der Drehzahlleitern zueinander ergeben sich als Funktion der Standübersetzungen so, dass sich die zu einem Betriebspunkt gehörigen Drehzahlen durch eine gerade Linie verbinden lassen. Das Drehzahlleiterdiagramm stellt somit die linearen Drehzahlbeziehungen des Planetengetriebes grafisch dar. Im dem hier dargestellten Drehzahlzustand dreht die erste Abtriebswelle 3 schneller als die zweite Abtriebswelle 4. Die erste Reaktionswelle 5 dreht nochmals deutlich schneller als die Abtriebswelle 3. Die zweite Reaktionswelle 6 dreht nochmals deutlich langsamer als die Abtriebswelle 4, aber immer noch mit positiver Drehzahl. In einer Fahrzeuganwendung würde dieser Drehzahlzustand zu einer Kurvenfahrt gehören, bei der die erste Abtriebswelle 3 das kurvenäußere Rad antreibt.

Fasst man in so einem Drehzahlleiterdiagramm die Verbindungslinie der Drehzahlpunkte jedes beliebigen Betriebszustandes als einen mechanischen Hebel auf, dann wirken die Drehmomente in so einem Planetengetriebe wie Kräfte an diesem Hebel. Das Drehzahlleiterdiagramm ist somit gut geeignet, auch die Drehmomentverhältnisse in einem Planetengetriebe zu verdeutlichen.

Das kurvenäußere, von der ersten Abtriebswelle 3 getriebene Rad soll nun mehr Drehmoment übertragen als das infolge der Fliehkraftwirkung mit geringerer Radlast belastete kurveninnere Rad. Dazu wird nun die Drehmoment aufprägende Einrichtung 8 an der zweiten Reaktionswelle 6 aktiviert. In der Ausführung nach Fig. 2 ist das eine Bremse 25. Bei positiver Drehzahl kann so eine Bremse nur ein negatives Drehmoment erzeugen, so dass an der Reaktionswelle 6 eine Leistung aus dem Getriebe fließt. Aus Gleichgewichtsgründen erzeugt das negative Drehmoment an der Reaktionswelle 6 bzw. am Sonnenrad 13 ein positives, also antreibendes Drehmoment am Hohlrad 15, das mit der zweiten Abtriebswelle 4 verbunden ist. Gleichzeitig wird ein negatives, also abtreibendes Drehmoment am Hohlrad 14 erzeugt, das mit der ersten Abtriebswelle 3 verbunden ist. Das negative Drehmoment an der Reaktionswelle 6 erzwingt somit einen Leistungsfluss von der zweiten Abtriebswelle 4 über das Überlagerungsgetriebe 10 zur ersten Abtriebswelle 3. Genauso könnte man durch Aktivierung einer Bremse an der Reaktionswelle 5 einen Leistungsfluss von der ersten Abtriebswelle 3 zur zweiten Abtriebswelle 4 erzwingen.

Das Hauptdifferenzial 30 teilt das Antriebsdrehmoment je nach Standübersetzung in einem festen Verhältnis auf seine Abtriebswellen auf. Bei einem Achsdifferenzial eines Fahrzeugs ist das üblicherweise eine 50%: 50% Drehmomentaufteilung. Je nach Drehzahlzustand ergibt sich damit auch eine Leistungsverzweigung auf die beiden Abtriebswellen des Hauptdifferenzials. Das in Reihe nachgeschaltete Überlagerungsgetriebe erzeugt dann noch einen geregelten Leistungsfluss von der ersten Abtriebswelle zur zweiten Abtriebswelle oder umgekehrt. Dadurch lässt sich jede beliebige Drehmomentverteilung zwischen den Abtriebswellen einregeln. Für eine 100% : 0% Drehmomentverlagerung auf die erste Abtriebswelle muss somit im mindestens 4-welligen Überlagerungsgetriebe nur noch das halbe Abtriebsmoment geregelt werden. Die zu regelnden Leistungspfade sind somit nur auf etwa die halbe Antriebsleistung zu dimensionieren.

Fig. 4 zeigt das Drehzahlleiterdiagramm für ein Getriebe nach Fig. 1 für den gleichen kinematischen Zustand wie in Fig. 3. Im Getriebe nach Fig. 1 sind die Drehmoment aufprägenden Einrichtungen als elektrische Maschinen 27 ausgeführt, die sowohl positive als auch negative Drehmomente aufprägen können. Ein ähnlicher wie in Fig. 3 beschriebener Leistungsfluss von der zweiten Abtriebswelle 4 zur ersten Abtriebswelle 3 kann mit dem Getriebe nach Fig. 1 durch viele verschiedene Drehmomentbelastungen der beiden Drehmoment aufprägenden Einrichtungen 7 und 8 erzeugt werden. In Fig. 4 dargestellt ist eine Regelung, bei der an der zweiten Reaktionswelle 6 eine Leistung aus dem Überlagerungsgetriebe 10 abfließt und an der ersten Reaktionswelle 5 eine Leistung in das Überlagerungsgetriebe 10 hinein fließt. Das lässt sich sogar so regeln, dass die Leistung, die die elektrische Maschine 8 generatorisch über die Reaktionswelle 8 aus dem Überlagerungsgetriebe abzieht, vermindert um Verluste in der Leistungssteuerung 28 von der elektrischen Maschine 7 motorisch über die Reaktionswelle 5 ins Überlagerungsgetriebe zurück übertragen wird. Mit so einem Regelkonzept ist die maximale Belastung jeder E-Maschine in einem aktiven Differenzial nach Fig. 1 nur etwa halb so groß wie die maximale Belastung jeder Bremse in einem aktiven Differenzial nach Fig. 2:

Für die Aufgabenstellung der aktiven Drehmomentverteilung würde in dem Differenzial nach Fig. 1 auch nur eine E-Maschine ausreichen. Die muss dann aber für den Fall, dass sie für eine bestimmte Drehmomentverteilung motorisch eine Leistung ins Getriebe treiben muss, mit einem Energiespeicher 29 in Verbindung stehen. Die in Fig. 1 dargestellte Variante kommt für die aktive Drehmomentverteilung ohne zusätzlichen Energiespeicher 29 aus und erreicht durch die Zurückübertragung der Regelleistung sehr hohe Wirkungsgrade.

In Verbindung mit einem Energiespeicher 29 lässt sich das aktive Differenzial in der Ausführung mit elektrischen Maschinen nach Fig. 1 auch als Hybridantrieb nutzen. Der mechanischen Antriebsleistung an der Antriebswelle 2 kann dann elektrische Leistung zum Boosten überlagert werden. Im Schubbetrieb des Fahrzeugs kann ein Teil der Bremsleistung über die Abtriebswellen und die E-Maschinen an den Reaktionswellen in den Energiespeicher geleitet werden.

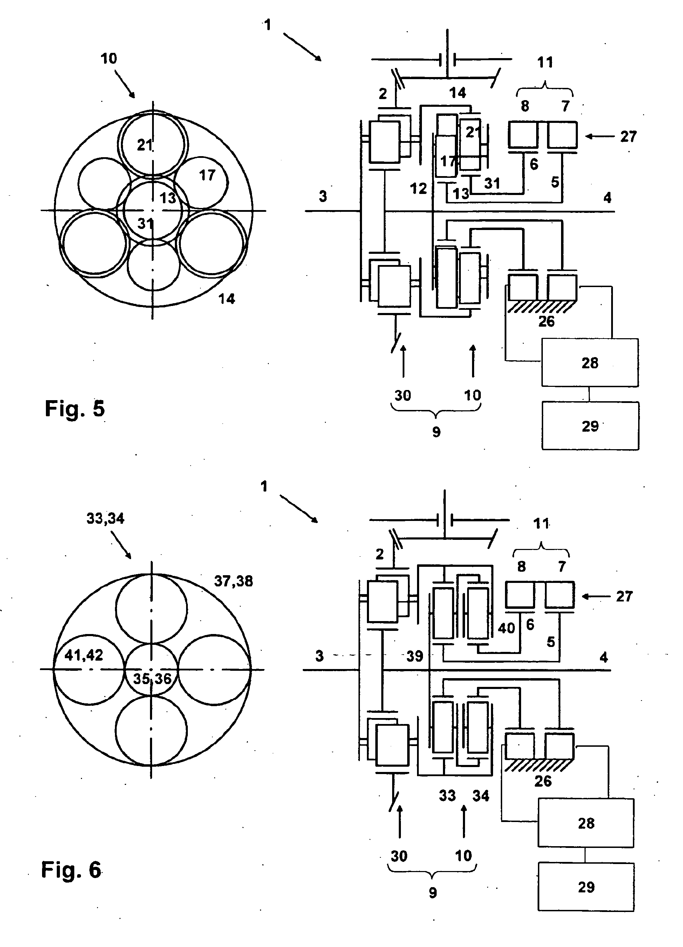

Fig. 5 zeigt die Struktur eines dritten Ausführungsbeispiels des erfindungsgemäßen aktiven Differenzials 1. Die Antriebswelle 2 treibt wieder das Hauptdifferenzial 30 mit den beiden Abtriebswellen 3 und 4. Auch in diesem Ausführungsbeispiel umfasst der Getriebeteil 9 neben dem Hauptdifferenzial 30 ein vierwelliges Überlagerungsgetriebe 10, hier aber mit zwei Sonnenrädern 13 und 31, einem Hohlrad 14 und einem Planetenträger 12. Die beiden Sonnenräder 13 und 31 stehen mit den beiden Reaktionswellen 5 und 6 in Verbindung. Das Hohlrad 14 ist mit der ersten Abtriebswelle 3 verbunden, der Planetenträger 12 ist mit der zweiten Abtriebswelle 4 verbunden. Der Planetenträger 12 trägt mehrere Sätze Planeten, wobei jeder Satz einen Sonnenradplaneten 17 beinhaltet, der mit dem Sonnenrad 13 kämmt, und einen eventuell gestuften Planeten 21, der mit dem Hohlrad 14, dem Sonnenradplaneten 17 und dem anderen Sonnenrad 31 kämmt.

In der Ausführung nach Fig. 5 sind die Drehmoment aufprägenden Einrichtungen 7 und 8 wieder als elektrische Maschinen 27 vorgesehen, die über ihre Leistungssteuerung 28 wieder optional mit einem Energiespeicher 29 verbunden sind.

Im Vergleich zu den Ausführungsformen nach den Fig. 1 und 2 kann man mit der Ausführungsform des 4-welligen Überlagerungsgetriebes nach Fig. 5 im gleichen Bauraum nicht ganz so große Verhältnisse zwischen den Drehzahldifferenzen der Reaktionswellen (n5-n6) und den Drehzahldifferenzen der Abtriebswellen (n3-n4) erreichen. Das führt dann zu etwas höheren Belastungen der Drehmoment aufprägenden Einrichtungen. Außerdem führt das dazu, dass selbst bei dem maximalen Drehzahlverhältnis zwischen den beiden Abtriebswellen die langsamer drehende Reaktionswelle noch eine positive Drehzahl hat. In einer Ausführung mit elektrischen Maschinen an den Reaktionswellen kann man dann dieses Differenzial so auslegen, dass diese Maschinen auch bei höchst belasteter Kurvenfahrt noch bei maximaler elektrischer Leistung, also auf ihrer Maximalleistungshyperbel betrieben werden können.

Da in dieser Ausführungsform der Planetenträger mit einer der Abtriebswellen verbunden ist, sind darüber hinaus bei vergleichbaren Betriebszuständen die Gleitwälzleistungen im Überlagerungsgetriebe nach Fig. 5 kleiner, der Wirkungsgrad ist also etwas besser als in den Ausführungsformen nach den Fig. 1 und 2.

Fig. 6 zeigt die Struktur eines vierten Ausführungsbeispiels des erfindungsgemäßen aktiven Differenzials 1. Das 4-wellige Überlagerungsgetriebe 10 im Getriebeteil 9 besteht hier aus einer ersten 33 und einer zweiten 34 einfachen Planetenradstufe, die jeweils ein Sonnenrad 35, 36, ein Hohlrad 37, 38 und einen Planetenträger 39, 40 mit mehreren Einzelplaneten 41, 42 aufweisen, wobei das erste Hohlrad 37 und der zweite Planetenträger 40 mit der ersten Abtriebswelle 3 in Verbindung stehen, wobei das zweite Hohlrad 38 und der erste Planetenträger 39 mit der zweiten Abtriebswelle 4 in Verbindung stehen und wobei die beiden Sonnenräder 35, 36 mit den beiden Reaktionswellen 5, 6 in Verbindung stehen.

Eine Ausführungsform dieser Art führt zu relativ großen Planetenrädern, die sich sehr einfach wälzlagern lassen. Das führt dann zu einem hohen Übertragungswirkungsgrad. Im Vergleich zu den Ausführungsformen nach den Fig. 1, 2 und 5 sind die hiermit im gleichen Bauraum erreichbaren Verhältnisse zwischen den Drehzahldifferenzen der Reaktionswellen und den Drehzahldifferenzen der Abtriebswellen noch etwas kleiner. Dafür hat diese Ausführungsform die einfachsten Planetenanordnungen, was sich in einem niedrigen Betriebsgeräusch und eventuell auch in niedrigen Herstellungskosten auswirkt.

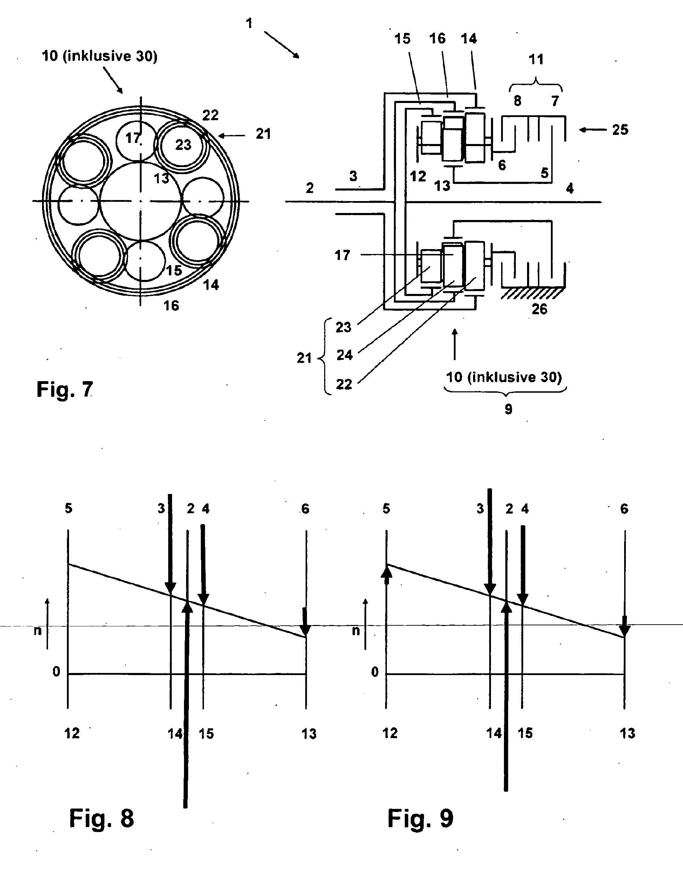

Fig. 7 zeigt die Struktur eines fünften Ausführungsbeispiels des erfindungsgemäßen aktiven Differenzials 1 beispielhaft in einer Ausführung als Längsdifferenzial zwischen einer Vorderachse und einer Hinterachse eines Fahrzeugs. In diesem Ausführungsbeispiel sind das Hauptdifferenzial 30 und das Getriebe für die nachgeschaltete Überlagerungsfunktion in einem einzigen 5-welligen Überlagerungsgetriebe 10 dargestellt.

Das Hauptdifferenzial 30 umfasst die drei Hohlräder 14, 15 und 16 und den Planetenträger 12 mit den Stufenplaneten 21. Hohlrad 16 ist mit der Antriebswelle 2 verbunden, das etwas größere Hohlrad 14 mit der ersten Abtriebswelle 3 und das etwas kleinere Hohlrad 15 mit der zweiten Abtriebswelle 4. Jedes Hohlrad steht mit einer der drei Stufen 22, 23 und 24 des Stufenplaneten 21 in Eingriff.

Für die Funktion des Hauptdifferenzials 30 ist der Planetenträger 12 lastfrei. Die Drehmomentverteilung vom Antrieb 2 auf die beiden Abtriebe 3 und 4 ergibt sich dann nur aus den Umfangskräften an den Hohlrädern, die auf den Stufenplaneten wirken und dort in einem Kräftegleichgewicht und einem Drehmomentgleichgewicht stehen müssen.

Das nachgeschaltete Überlagerungsdifferenzial umfasst die beiden Hohlräder 14 bzw. 15, die mit der ersten bzw. zweiten Abtriebswelle 3 bzw. 4 verbunden sind. Ein Sonnenrad 13, das über einen zusätzlichen Sonnenradplaneten 17 mit dem Stufenplaneten in Eingriff steht, bildet die erste Reaktionswelle 5. Der Planetenträger 12 bildet die zweite Reaktionswelle 6. In der Ausführungsform nach Fig. 7 sind die Drehmoment aufprägenden Einrichtungen als Bremsen 25 ausgeführt. Hier wären aber auch elektrische Maschinen 27 wie in der Ausführung nach den Fig. 1, 5 und 6 denkbar.

Diese Ausführungsform (Fig. 7) des erfindungsgemäßen aktiven Differenzials baut sehr kompakt. Wie bei den Ausführungsformen nach den Figuren 1 und 2 ist es aber wieder sehr wichtig, bei der konstruktiven Ausgestaltung dieses Differenzials auf niedrige Verzahnungs-und Lagerverluste zu achten.

Fig. 8 zeigt in einem Drehzahl- und Drehmomentdiagramm für die fünf Wellen Antrieb 2, erster Abtrieb 3, zweiter Abtrieb 4, erste Reaktionswelle 5 und zweite Reaktionswelle 6 die Drehmomentwirkungen bei einer ungleichmäßigen Drehmomentverteilung. Ohne Reaktionsmoment an einer der Reaktionswellen würde sich das Antriebsdrehmoment gleichmäßig auf beide Abtriebswellen aufteilen. Schon ein kleines regelbares Bremsmoment an einer der Reaktionswellen führt zu einer deutlich anderen Drehmomentverteilung T3 : T4.

Fig. 9 verdeutlicht schließlich in einem Drehzahl- und Drehmomentdiagramm die Wirkung von 2 elektrischen Maschinen als Drehmoment aufprägende Einrichtungen an den Reaktionswellen 5 und 6 in einem Differenzial nach Fig.7. Mit kleinsten gegenläufigen Regelmomenten an den Reaktionswellen 5 und 6 lässt sich die Drehmomentverteilung von der Antriebswelle 2 auf die beiden Abtriebswellen 3 und 4 in einem weiten Regelbereich stufenlos und mit sehr geringen Verlusten justieren.

### Bezugszeichenliste:

- 1: Aktives Differenzial
- 2: Antriebswelle
- 3: erste Abtriebswelle
- 4: zweite Abtriebswelle
- 5: erste Reaktionswelle
- 6: zweite Reaktionswelle
- 7: erste Drehmoment aufprägende Einrichtung
- 8: zweite Drehmoment aufprägende Einrichtung
- 9: Getriebeteil
- 10: Überlagerungsgetriebe
- 11: Regelteil
- 12: Planetenträger
- 13: Sonnenrad
- 14: erstes Hohlrad
- 15: zweites Hohlrad
- 16: drittes Hohlrad
- 17: Sonnenradplanet
- 18: erster Hohlradplanet
- 19: zweiter Hohlradplanet
- 20: dritter Hohlradplanet
- 21: gestufter Hohlradplanet
- 22: erste Stufe des Stufenplaneten
- 23: zweite Stufe des Stufenplaneten
- 24: dritte Stufe des Stufenplaneten
- 25: Bremse 26 Getriebegehäuse
- 27: Elektrische Maschine
- 28: Leistungssteuerung
- 29: Energiespeicher
- 30: Hauptdifferenzial
- 31: erstes Sonnenrad
- 32: zweites Sonnenrad
- 33: erste einfache Planetenradstufe
- 34: zweite einfache Planetenradstufe
- 35: Sonnenrad der ersten einfachen Planetenradstufe
- 36: Sonnenrad der zweiten einfachen Planetenradstufe
- 37: Hohlrad der ersten einfachen Planetenradstufe
- 38: Hohlrad der zweiten einfachen Planetenradstufe
- 39: Planetenträger der ersten einfachen Planetenradstufe
- 40: Planetenträger der zweiten einfachen Planetenradstufe
- 41: Einzelplaneten der ersten einfachen Planetenradstufe
- 42: Einzelplaneten der zweiten einfachen Planetenradstufe

## Patentansprüche

1. Aktives .Differenzial (1) zwischen einer Antriebswelle (2) und zwei Abtriebswellen (3, 4), bestehend aus einem Getriebeteil (9) und einem Regelteil (11), wobei der Getriebeteil (9) ein mindestens 4-welliges Überlagerungsgetriebe (10) mit den beiden Abtriebswellen (3, 4) und zwei Reaktionswellen (5, 6) aufweist und dass die beiden Reaktionswellen (5, 6) mit je einer Drehmoment aufprägenden Einrichtung (7, 8) im Regelteil (11) verbunden sind,
**dadurch gekennzeichnet,**
**dass** das Überlagerungsgetriebe (10) im Getriebeteil (9) einen Planetenträger (12) aufweist, der mit einer der Reaktionswellen (5 oder 6) in Verbindung steht, dass das Überlagerungsgetriebe (14) ein Sonnenrad (13) aufweist, das mit der anderen Reaktionswelle (6 oder 5) in Verbindung steht, und dass das Überlagerungsgetriebe (10) mindestens zwei Hohlräder (14, 15) aufweist, die mit den beiden Abtriebswellen (3, 4) in Verbindung stehen.

2. Aktives Differential (1) zwischen einer Antriebswelle (2) und zwei Abtriebswellen (3, 4) Anspruch 1,
**dadurch gekennzeichnet,**
**dass** das Überlagerungsgetriebe (10) ein drittes Hohlrad (16) aufweist, das mit der Antriebswelle (2) in Verbindung steht.

3. Aktives Differenzial (1) zwischen einer Antriebswelle (2) und zwei Abtriebswellen (3, 4) nach einem der vorangehenden Ansprüche,
**dadurch gekennzeichnet;**
**dass** der Planetenträger (12) mehrere Sätze Planeten aufweist, von denen jeder Satz einen Sonnenradplaneten (17) aufweist, der mit dem Sonnenrad (13) kämmt, und von denen jeder Satz mehrere Hohlradplaneten (18, 19) aufweist, wobei alle Hohlradplaneten mit dem Sonnenradplaneten (17) kämmen und wobei der erste Hohlradplanet (18) zusätzlich mit dem Hohlrad (14) der ersten Abtriebswelle (3) kämmt und der zweite Hohlradplanet (19) mit dem Hohlrad (15) der zweiten Abtriebswelle (4) kämmt.

4. Aktives Differenzial (1) zwischen einer Antriebswelle (2) und zwei Abtriebswellen (3, 4) nach Anspruch 3,
**dadurch gekennzeichnet,**
**dass** jeder Planetensatz einen dritten Hohlradplaneten (20) aufweist, mit dem Hohlrad (16) der Antriebswelle (2) kämmt.

5. Aktives Differenzial (1) zwischen einer Antriebswelle (2) und zwei Abtriebswellen (3, 4) nach einem der Ansprüche 1 bis 2,
**dadurch gekennzeichnet,**
**dass** der Planetenträger (12) mehrere Sätze Planeten aufweist, von denen jeder Satz einen Sonnenradplaneten (17) aufweist, der mit dem Sonnenrad (13) kämmt, und von denen jeder Satz einen Stufenplaneten (21) mit mehreren Stufen (22, 23) aufweist, wobei der Stufenplanet (21) über eine seiner Stufen mit dem Sonnenradplaneten (17) kämmt und wobei die erste Stufe (22) des Stufenplaneten mit dem Hohlrad (14) der ersten Abtriebswelle (3) kämmt und die zweite Stufe (23) mit dem Hohlrad (15) der zweiten Abtriebswelle (4) kämmt.

6. Aktives Differenzial (1) zwischen einer Antriebswelle (2) und zwei Abtriebswellen (3, 4) nach Anspruch 5,
**dadurch,gekennzeichnet,**
**dass** der Stufenplanet eine dritte Stufe (24) aufweist, die mit dem Hohlrad (16) der Antriebswelle (2) kämmt.

7. Aktives. Differenzial (1) zwischen einer Antriebswelle (2) und zwei Abtriebswellen (3, 4), bestehend aus einem Getriebeteil (9) und einem Regelteil (11), wobei der Getriebeteil (9) ein mindestens 4-welliges Überlagerungsgetriebe (10) mit den beiden Abtriebswellen (3, 4) und zwei Reaktionswellen (5, 6) aufweist und dass die beiden Reaktionswellen (5, 6) mit je einer Drehmoment aufprägenden Einrichtung (7, 8) im Regelteil (11) verbunden sind,
**dadurch gekennzeichnet,**
**dass** das Überlagerungsgetriebe (10) im Getriebeteil (9) einen Planetenträger (12) aufweist, der mit einer der Abtriebswellen (3 oder 4) in Verbindung steht, dass das Überlagerungsgetriebe ein Hohlrad (14) aufweist, das mit der anderen Abtriebswelle (4 oder 3) in Verbindung steht, dass das Überlagerungsgetriebe (10) zwei Sonnenräder (13, 31) aufweist, die je mit einer der beiden Reaktionswellen (5, 6) in Verbindung stehen und dass der Planetenträger (12) mehrere Sätze von Planetenrädern aufweist, wobei jeder Satz einen Hohlradplaneten (21) aufweist, der mit dem einen Hohlrad 14 kämmt und der mit dem einen Sonnenrad (31) direkt und mit dem anderen Sonnenrad (13) über ein weiteren Sonnenradplaneten (17) in Eingriff steht.

8. Aktives Differenzial (1) zwischen einer Antriebswelle (2) und zwei Abtriebswellen (3, 4), bestehend aus einem Getriebeteil (9) und einem Regelteil (11), wobei der Getriebeteil (9).ein mindestens 4-welliges Überlagerungsgetriebe (10) mit den beiden Abtriebswellen (3, 4) und zwei Reaktionswellen (5, 6) aufweist und dass die beiden Reaktionswellen (5, 6) mit je einer Drehmoment aufprägenden Einrichtung (7, 8) im Regelteil (11) verbunden sind,
**dadurch gekennzeichnet,**
**dass** das Überlagerungsgetriebe (10) im Getriebeteil (9) aus einer ersten und einer zweiten einfachen Planetenradstufe (33, 34) besteht, die jeweils ein Sonnenrad (35, 36), ein Hohlrad (37, 38) und einen Planetenträger (39, 40) mit mehreren Einzelplaneten (41, 42) aufweisen, wobei das erste Hohfrad (37) und der zweite Planetenträger (40) mit der ersten Abtriebswelle (3) in Verbindung stehen, wobei das zweite Hohlrad (38) und der erste Planetenträger (39) mit der zweiten Abtriebswelle (4) in Verbindung stehen und wobei die beiden Sonnenräder (35, 36) mit den beiden Reaktionswellen (5, 6) in Verbindung stehen.

9. Aktives Differenzial (1) zwischen einer Antriebswelle (2) und zwei Abtriebswellen (3, 4) nach einem der vorangehenden Ansprüche,
**dadurch gekennzeichnet,**
**dass** mindestens eine der Drehmoment aufprägenden Einrichtungen (7, 8) eine Bremse (25) ist, mit der eine Reaktionswelle (5, 6) mit einem Getriebegehäuse (26) verbindbar ist.

10. Aktives Differenzial (1) zwischen einer Antriebswelle (2) und zwei Abtriebswellen (3, 4) nach einem der vorangehenden Ansprüche,
**dadurch gekennzeichnet**;
das mindestens eine der Drehmoment aufprägenden Einrichtungen (7, 8) eine elektrische Maschine (27) ist.

11. Aktives Differenzial (1) zwischen einer Antriebswelle (2) und zwei Abtriebswellen (3, 4) nach Anspruch 8, soweit nicht rückbezogen auf Anspruch 7,
**dadurch gekennzeichnet,**
**dass** beide Drehmoment aufprägenden Einrichtungen (7, 8) elektrische Maschine (27) sind, die über ihre Leistungssteuerung (28) mit einem Energiespeicher (29) in Verbindung stehen.

## Claims

1. Active differential (1) between a drive shaft (2) and two output shafts (3, 4), which consists of a transmission part (9) and of a control part (11), the transmission part (9) having an at least 4 - shaft back-up transmission (10) with the two output shafts (3, 4) and two reaction shafts (5, 6), the two reaction shafts (5, 6) being connected in each case to a torque-imparting device (7, 8) in the control part (11), **characterized in that** the back-up transmission (10) has in the transmission part (9) a planet carrier (12) which is connected to one of the reaction shafts (5 or 6), **in that** the back-up transmission (10) has a sun wheel (13) which is connected to the other reaction shaft (6 or 5), and **in that** the back-up transmission (10) has at least two ring wheels (14, 15) which are connected to the two output shafts (3, 4).

2. Active differential (1) between a drive shaft (2) and two output shafts (3, 4) according to Claim 1, **characterized in that** the back-up transmission (10) has a third ring wheel (16) which is connected to the drive shaft (2).

3. Active differential (1) between a drive shaft (2) and two output shafts (3, 4) according to one of the preceding claims, **characterized in that** the planet carrier (12) has a plurality of sets of planets, each set of which has a sun wheel planet (17), which meshes with the sun wheel (13), and each set of which has a plurality of ring-wheel planets (18, 19) all the ring-wheel planets meshing with the sun-wheel planet (17), and the first ring-wheel planet (18) meshing additionally with the ring wheel (14) of the first output shaft (3), and the second ring-wheel planet (19) meshing with the ring wheel (15) of the second output shaft (4).

4. Active differential (1) between a drive shaft (2) and two output shafts (3, 4) according to Claim 3, **characterized in that** each planet set has a third ring-wheel planet (20) which meshes with the ring wheel (16) of the drive shaft (2).

5. Active differential (1) between a drive shaft (2) and two output shafts (3, 4) according to either one of Claims 1 and 2, **characterized in that** the planet carrier (12) has a plurality of sets of planets, each set of which has a sun-wheel planet (17), which meshes with the sun wheel (13), and each set of which has a step planet (21) with a plurality of steps (22, 23), the step planet (21) meshing via one of its steps with the sun-wheel planet (17), and the first step (22) of the step planet meshing with the ring wheel (14) of the first output shaft (3), and the second step (23) meshing with the ring wheel (15) of the second output shaft (4).

6. Active differential (1) between a drive shaft (2) and two output shafts (3, 4) according to Claim 5, **characterized in that** the step planet has a third step (24) which meshes with the ring wheel (16), of the drive shaft (2).

7. Active differential (1) between a drive shaft (2) and two output shafts (3, 4), which consists of a transmission part (9) and of a control part (11), the transmission part (9) having an at least four-shaft back-up transmission (10) with the two output shafts (3, 4) and with two reaction shafts (5, 6), the two reaction shafts (5, 6) being connected in each case to a torque-imparting device (7, 8) in the control part (11), **characterized in that** the back-up transmission (10) has in the transmission part (9) a planet carrier (12) which is connected to one of the output shafts (3 or 4), **in that** the back-up transmission has a ring wheel (14) which is connected to the other output shaft (4 or 3), **in that** the back-up transmission (10) has two sun wheels (13, 31) which are connected in each case to one of the two reaction shafts (5, 6), and **in that** the planet carrier (12) has a plurality of sets of planet wheels, each set having a ring-wheel planet (21) which meshes with the one ring wheel (14) and which is engaged with the one sun wheel (31) directly and with the other sun wheel (13) via a further sun-wheel planet (17).

8. Active differential (1) between a drive shaft (2) and two output shafts (3, 4), which consists of a transmission part (9) and of a control part (11), the transmission part (9) having an at least four-shaft back-up transmission (10) with the two output shafts (3, 4) and with two reaction shafts (5, 6), and in that the two reaction shafts (5, 6) are connected in each case to a torque-imparting device (7, 8) in the control part (11), **characterized in that** the back-up transmission (10) consists in the transmission part (9) of a first and of a second single planet-wheel step (33, 34) which have in each case a sun wheel (35, 36), a ring wheel (37, 38) and a planet carrier (39, 40) with a plurality of individual planets (41, 42), the first ring wheel (37) and the second planet carrier (40) being connected to the first output shaft (3), the second ring wheel (38) and the first planet carrier (39) being connected to the second output shaft (4), and the two sun wheels (35, 36) being connected to the two reaction shafts (5, 6).

9. Active differential (1) between a drive shaft (2) and two output shafts (3, 4) according to one of the preceding claims, **characterized in that** at least one of the torque-imparting devices (7, 8) is a brake (25), by means of which a reaction shaft (5, 6) can be connected to a transmission case (26).

10. Active differential (1) between a drive shaft (2) and two output shafts (3, 4) according to one of the preceding claims, **characterized in that** at least one of the torque-imparting devices (7, 8) is an electric machine (27).

11. Active differential (1) between a drive shaft (2) and two output shafts (3, 4) according to Claim 8, in so far as it does not refer back to Claim 7, **characterized in that** both torque-imparting devices (7, 8) are electric machines (27) which are connected via their power control (28) to an energy accumulator (29).

## Revendications

1. Différentiel actif (1) entre un arbre d'entraînement (2) et deux arbres de sortie (3, 4), constitué d'une partie d'engrenage (9) et d'une partie de réglage (11), la partie d'engrenage (9) présentant un engrenage de superposition (10) à au moins 4 arbres avec les deux arbres de sortie (3, 4) et deux arbres de réaction (5, 6), et en ce que les deux arbres de réaction (5, 6) sont connectés dans la partie de réglage (11) à un dispositif (7, 8) respectif exerçant un couple,
**caractérisé en ce que**
l'engrenage de superposition (10) dans la partie d'engrenage (9) présente un porte-satellites (12), qui est en liaison avec l'un des arbres de réaction (5 ou 6), **en ce que** l'engrenage de superposition (10) présente une roue solaire (13), qui est en liaison avec l'autre arbre de réaction (6 ou 5), et **en ce que** l'engrenage de superposition (10) présente au moins deux couronnes (14, 15) qui sont en liaison avec les deux arbres de sortie (3, 4).

2. Différentiel actif (1) entre un arbre d'entraînement (2) et deux arbres de sortie (3, 4) selon la revendication 1,
**caractérisé en ce que**
l'engrenage de superposition (10) présente une troisième couronne (16) qui est en liaison avec l'arbre d'entraînement (2).

3. Différentiel actif (1) entre un arbre d'entraînement (2) et deux arbres de sortie (3, 4) selon l'une quelconque des revendications précédentes,
**caractérisé en ce que**
le porte-satellites (12) présente plusieurs jeux de pignons planétaires, dont chaque jeu présente un pignon de roue solaire (17) qui s'engrène avec la roue solaire (13), et dont chaque jeu présente plusieurs pignons de couronne (18, 19), tous les pignons de couronne s'engrenant avec le pignon de roue solaire (17) et le premier pignon de couronne (18) s'engrenant en outre avec la couronne (14) du premier arbre de sortie (3) et le deuxième pignon de couronne (19) s'engrenant avec la couronne (15) du deuxième arbre de sortie (4).

4. Différentiel actif (1) entre un arbre d'entraînement (2) et deux arbres de sortie (3, 4) selon la revendication 3,
**caractérisé en ce que**
chaque jeu de pignons planétaires présente un troisième pignon de couronne (20) avec lequel s'engrène la couronne (16) de l'arbre d'entraînement (2).

5. Différentiel actif (1) entre un arbre d'entraînement (2) et deux arbres de sortie (3, 4) selon l'une quelconque des revendications 1 à 2,
**caractérisé en ce que**
le porte-satellites (12) présente plusieurs jeux de pignons planétaires, dont chaque jeu présente un pignon de roue solaire (17) qui s'engrène avec la roue solaire (13), et dont chaque jeu présente un pignon planétaire étagé (21) avec plusieurs étages (22, 23), le pignon planétaire étagé (21) s'engrenant par le biais d'un de ses étages avec le pignon de roue solaire (17) et le premier étage (22) du pignon planétaire étagé s'engrenant avec la couronne (14) du premier arbre de sortie (3) et le deuxième étage (23) s'engrenant avec la couronne (15) du deuxième arbre de sortie (4).

6. Différentiel actif (1) entre un arbre d'entraînement (2) et deux arbres de sortie (3, 4) selon la revendication 5,
**caractérisé en ce que** le pignon planétaire étagé présente un troisième étage (24), qui s'engrène avec la couronne (16) de l'arbre d'entraînement (2).

7. Différentiel actif (1) entre un arbre d'entraînement (2) et deux arbres de sortie (3, 4), constitué d'une partie d'engrenage (9) et d'une partie de réglage (11), la partie d'engrenage (9) présentant un engrenage de superposition (10) à au moins 4 arbres avec les deux arbres de sortie (3, 4) et deux arbres de réaction (5, 6), et en ce que les deux arbres de réaction (5, 6) sont connectés dans la partie de réglage (11) à un dispositif (7, 8) respectif exerçant un couple,
**caractérisé en ce que**
l'engrenage de superposition (10) dans la partie d'engrenage (9) présente un porte-satellites (12), qui est en liaison avec l'un des arbres de sortie (3 ou 4), **en ce que** l'engrenage de superposition présente une couronne (14), qui est en liaison avec l'autre arbre de sortie (4 ou 3), **en ce que** l'engrenage de superposition (10) présente deux roues solaires (13, 31), qui sont en liaison à chaque fois avec l'un des deux arbres de réaction (5, 6), et **en ce que** le porte-satellites (12) présente plusieurs jeux de pignons planétaires, chaque jeu présentant un pignon de couronne (21) qui s'engrène avec une couronne (14) et qui est en prise directe avec une roue solaire (31) et avec l'autre roue solaire (13) par le biais d'un autre pignon de roue solaire (17).

8. Différentiel actif (1) entre un arbre d'entraînement (2) et deux arbres de sortie (3, 4), constitué d'une partie d'engrenage (9) et d'une partie de réglage (11), la partie d'engrenage (9) présentant un engrenage de superposition (10) à au moins 4 arbres avec les deux arbres de sortie (3, 4) et deux arbres de réaction (5, 6), et en ce que les deux arbres de réaction (5, 6) sont connectés dans la partie de réglage (11) à un dispositif (7, 8) respectif exerçant un couple,
**caractérisé en ce que**
l'engrenage de superposition (10) dans la partie d'engrenage (9) se compose d'un premier et d'un deuxième étage de pignon planétaire simple (33, 34), qui présentent chacun une roue solaire (35, 36), une couronne (37, 38) et un porte-satellites (39, 40), avec plusieurs pignons planétaires individuels (41, 42), la première couronne (37) et le deuxième porte-satellites (40) étant en liaison avec le premier arbre de sortie (3), la deuxième couronne (38) et le premier porte-satellites (39) étant en liaison avec le deuxième arbre de sortie (4) et les deux roues solaires (35, 36) étant en liaison avec les deux arbres de réaction (5, 6).

9. Différentiel actif (1) entre un arbre d'entraînement (2) et deux arbres de sortie (3, 4) selon l'une quelconque des revendications précédentes, **caractérisé en ce qu'**au moins un des dispositifs (7, 8) exerçant un couple est un frein (25), auquel peut être connecté un arbre de réaction (5, 6) avec un boîtier d'engrenage (26).

10. Différentiel actif (1) entre un arbre d'entraînement (2) et deux arbres de sortie (3, 4) selon l'une quelconque des revendications précédentes, **caractérisé en ce qu'**au moins l'un des dispositifs (7, 8) exerçant un couple est un moteur électrique (27).

11. Différentiel actif (1) entre un arbre d'entraînement (2) et deux arbres de sortie (3, 4) selon la revendication 8, dans la mesure où elle ne dépend pas de la revendication 7,
**caractérisé en ce que**
les deux dispositifs (7, 8) exerçant un couple sont des moteurs électriques (27), qui sont en liaison par le biais de_{'}leur commande de puissance (28) avec un accumulateur d'énergie (29).
